(19) Europäisches Patentamt
European Patent Office
Office européen des brevets

(11) EP 2 199 754 B1

(12) # EUROPÄISCHE PATENTSCHRIFT

(45) Veröffentlichungstag und Bekanntmachung des Hinweises auf die Patenterteilung:
**04.04.2018 Patentblatt 2018/14**

(21) Anmeldenummer: **09014847.9**

(22) Anmeldetag: **30.11.2009**

(51) Int Cl.:
***B67D 7/08*** *(2010.01)* ***B67D 7/16*** *(2010.01)*
***B67D 7/20*** *(2010.01)* ***B67D 7/22*** *(2010.01)*
***B67D 7/66*** *(2010.01)* ***G01F 1/74*** *(2006.01)*
***G01F 15/02*** *(2006.01)*

(54) **Verfahren und Vorrichtung zur Übergabe einer zumindest zeitweise einen Gaseinschluss aufweisenden Flüssigkeit und zur Bestimmung der übergebenen Flüssigkeitsmenge**

Method and device for transferring a liquid with one at least temporary gas inclusion and for determining the amount of transferred liquid

Procédé et dispositif de transmission d'un liquide contenant au moins ponctuellement une insufflation de gaz et de détermination de la quantité de liquide transmise

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.12.2008 DE 102008063779**

(43) Veröffentlichungstag der Anmeldung:
**23.06.2010 Patentblatt 2010/25**

(73) Patentinhaber: **BARTEC BENKE GmbH**
**21465 Reinbek/Hamburg (DE)**

(72) Erfinder:
- **Böhm, Alfred**
  **94234 Viechtach (DE)**
- **Binder, Wilhelm**
  **94113 Tiefenbach (DE)**
- **Lerach, Dieter**
  **94227 Zwiesel (DE)**

(74) Vertreter: **Kohl, Karl-Heinz**
**Patentanwälte**
**Dipl.-Ing. A.K. Jackisch-Kohl**
**Dipl.-Ing. K.H. Kohl**
**Stuttgarter Strasse 115**
**70469 Stuttgart (DE)**

(56) Entgegenhaltungen:
**WO-A1-2008/106989** **WO-A2-2004/065914**
**CA-A1- 2 299 922** **DE-A1-102005 005 295**
**DE-U1- 9 316 008** **US-A- 4 266 188**
**US-A1- 2009 099 794**

EP 2 199 754 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Übergabe einer zumindest zeitweise einen Gaseinschluss aufweisenden Flüssigkeit, insbesondere von Kraftstoff, und zur Bestimmung der übergebenen Flüssigkeitsmenge gemäß dem Oberbegriff des Anspruchs 1. Bei einem solche Verfahren ist vorgesehen, dass die Flüssigkeit durch eine Leitung gefördert wird, eine Füllgradmessung in der Leitung durchgeführt wird, eine Durchflussmessung in der Leitung durchgeführt wird, und das Ergebnis der Füllgradmessung mit dem Ergebnis der Durchflussmessung verrechnet, insbesondere multipliziert wird, wobei ein Fördermengenwert $V_{mes}$ erhalten wird.

Die Erfindung betrifft ferner Vorrichtungen gemäß dem Oberbegriff der Ansprüche 13 und 14 zur Übergabe einer zumindest zeitweise einen Gaseinschluss aufweisenden Flüssigkeit, insbesondere von Kraftstoff, und zur Bestimmung der übergebenen Flüssigkeitsmenge. Derartige Vorrichtungen sind ausgebildet mit einer Leitung zum Fördern der Flüssigkeit, einer an der Leitung angeordneten Füllgradmesseinrichtung, einer an der Leitung angeordneten Durchflussmesseinrichtung, insbesondere einer an der Leitung angeordneten Druckmesseinrichtung, und einer Recheneinrichtung, die mit der Füllgradmesseinrichtung und der Durchflussmesseinrichtung in Signalverbindung steht, und die dafür eingerichtet ist, Messergebnisse der Füllgradmesseinrichtung mit Messergebnissen der Durchflussmesseinrichtung zu verrechnen, wobei ein Fördermengenwert $V_{mes}$ erhalten wird.

Bei der Übergabe von Flüssigkeiten, beispielsweise bei der Abgabe von Heizöl aus einem Tankfahrzeug, kann die Situation auftreten, dass Gaseinschlüsse in die Förderleitung für die Flüssigkeit gelangen. Derartige Gaseinschlüsse können beispielsweise dann auftreten, wenn im Abgabetank nur noch eine geringe Füllhöhe herrscht und durch Strudelbildung im Bereich des Tankauslaufs Gas mit der Flüssigkeit mitgerissen wird. Aber auch bei technischen Störungen, beispielsweise Leitungsundichtigkeiten, oder auch bei Manipulationen am Fördersystem können Gaseinschlüsse auftreten.

Derartige Gaseinschlüsse können potenziell zu Messfehlern führen, da an der Förderleitung angeordnete Zähler, zum Beispiel Verdrängungszähler, das Gas eventuell fälschlicherweise als Produkt (Heizöl) erkennen, und somit unter Umständen eine Fehlmessung generieren. Eichrechtliche Bestimmungen fordern jedoch, dass keine Gaseinschlüsse mitgemessen werden dürfen, beziehungsweise dass der Messfehler aufgrund von Gaseinschlüssen kleiner 1 Vol.-% liegt.

Um die eichrechtlichen Erfordernisse zu erfüllen und Fehlmessungen aufgrund von Gaseinschlüssen zu vermeiden, ist es bekannt, dem Mengenzähler einen Gasabscheider, der auch als Gasmessverhüter bezeichnet werden kann, vorzuschalten. Diese Gasabscheider scheiden die unerwünschten Gaseinschlüsse aus dem Förderleitungsverlauf ab, bevor die Gaseinschlüsse den Mengenzähler erreichen. Eine Messanlage mit Gasabscheider ist beispielsweise aus der DE 195 40 884 C2 bekannt.

Die Gasabscheider arbeiten üblicherweise unter dem von der Förderpumpe erzeugten Druck, wobei bei Anlagen mit Gasabscheider das Produkt über die unterschiedlichen Schläuche abgegeben wird. Dabei kann vorgesehen sein, die Anlage abzuschalten, wenn zuviel Gas in die Förderleitung gelangt und die Gefahr besteht, dass keine wirksame Gasabscheidung mehr möglich ist.

Ein anderer Ansatz zur eichgenauen Bestimmung der übergebenen Flüssigkeitsmenge ist in der gattungsbildenden DE 10 2005 005 295 A1 beschrieben. Diese Druckschrift lehrt, in der Übergabeleitung neben einer Durchflussmessung auch eine Füllgradmessung durchzuführen, also den Anteil der Flüssigkeit im Leitungsquerschnitt zu bestimmen. Die Ergebnisse der Füllgradmessung und der Durchflussmessung werden zum Ermitteln der Fördermenge miteinander verrechnet. Gemäß diesem Ansatz werden Gaseinschlüsse nicht abgeschieden sondern messtechnisch erfasst und bei der Fördermengenbestimmung rechnerisch mitberücksichtigt. Ein voluminöser und schwerer Gasabscheider kann somit entfallen, so dass eine besonders kompakte Anlage erhalten wird.

Das genannte Messkonzept wird auch in der WO 2008/106989 sowie in der deutschen Patentanmeldung DE 10 2008 047 122 beschrieben. Die DE 10 2005 005 295 A1 hat dabei erkannt, dass der Füllgrad druckabhängig sein kann, da Gasblasen im Gegensatz zu Flüssigkeiten stark kompressibel sind und folglich der volumenmäßige Gasanteil in der Leitung bei gleicher Gasmenge mit dem Druck schwankt. Daher lehren die genannten Druckschriften, dass eine Druckmessung vorgesehen sein kann, um diesen Effekt zu erfassen.

**Aufgabe** der Erfindung ist es, ein gattungsgemäßes Verfahren und eine gattungsgemäße Vorrichtung, bei denen zur Mengenbestimmung der Durchfluss mit dem Füllgrad verrechnet wird, so weiterzubilden, dass eine besonders hohe Messgenauigkeit gegeben ist.

Die Aufgabe wird erfindungsgemäß durch ein Verfahren mit den Merkmalen des Anspruchs 1 und Vorrichtungen mit den Merkmalen der Ansprüche 13 und 14 gelöst. Bevorzugte Ausführungsbeispiele sind in den abhängigen Ansprüchen angegeben.

Nach der Erfindung ist vorgesehen, dass der Fördermengenwert $V_{mes}$, der durch Verrechnung des Ergebnisses der Füllgradmessung mit dem Ergebnis der Durchflussmessung erhalten wird, mit einem Wert korrigiert wird, der ein Lösen des Gaseinschlusses in der Flüssigkeit berücksichtigt, wodurch ein korrigierter Fördermengenwert $V_{GES}$ erhalten wird, und dass der korrigierte Fördermengenwert $V_{GES}$ als Maß für die übergebene Flüssigkeitsmenge herangezogen wird.

Der Erfindung liegen mehrere überraschende Entdeckungen zugrunde. So wurde zum einen beobachtet, dass bei einer pumpenbetriebenen Flüssigkeitsabgabe, bei welcher weder eine Gasabscheidung noch eine füllgradabhängige Korrektur der Durchflussmesswerte vorgesehen war, bei der also Gaseinschlüsse ungehindert und ohne Korrektur auf die Durchflussmessanlage trafen, die resultierenden Messfehler viel geringer waren, als dies aufgrund der Gaseinschlüsse zu erwarten gewesen wäre. Teilweise waren die Messfehler sogar so gering, dass trotz eindringender Luft eine hinreichende Messgenauigkeit erhalten werden konnte, und sowohl der Gasabscheider als auch der Füllgradmesser zeitweise entbehrlich waren.

Eine weitere überraschende Entdeckung wurde bei der Durchführung eines Messverfahrens gemacht, bei dem Füllgradmessungen durchgeführt wurden und die Ergebnisse der Durchflussmessungen mit den Ergebnissen der Füllgradmessungen korrigiert wurden, bei dem also Gaseinschlüsse messtechnisch erfasst und rechnerisch berücksichtigt wurden. Hier wurden Versuche durchgeführt, bei denen auf der Saugseite der Förderpumpe ein definiertes Gasvolumen in die Flüssigkeit eingeleitet wurde. Dabei zeigte sich, dass der auf der Druckseite der Pumpe angeordnete Füllgradsensor zwar einen entsprechend der Druckerhöhung in der Pumpe etwa korrekten Volumenanteil des Gases angezeigt hat. So wurde beispielsweise bei einem eingeleiteten Gasanteil von 20% und einer Druckdifferenz an der Pumpe von 4 bar von der Füllgradmesseinrichtung ein korrekter Gasanteil von 5% angezeigt (wobei die relative Verringerung des Gasanteiles darauf zurückzuführen ist, dass das Gasvolumen mit zunehmendem Druck komprimiert wird, das Flüssigkeitsvolumen hingegen etwa gleichbleibend ist). Das theoretische ermittelte Fördervolumen, welches durch die Verrechnung der Ergebnisse der mit einer Messturbine durchgeführten Durchflussmessung mit den Ergebnissen der Füllgradmessung erhalten wurde, war jedoch stets im Bereich einiger Prozent größer als das tatsächlich geförderte Volumen.

Die Erfindung hat erkannt, dass die genannten Effekte auf ein zumindest teilweises Lösen des Gaseinschlusses in der geförderten Flüssigkeit zurückzuführen sind. So können flüssige Kohlenwasserstoffe, insbesondere Kraftstoffe, vergleichsweise große Mengen von Luft im gelösten Zustand aufnehmen und halten. Beispielsweise kann in Ölen und/oder Kerosin eine Luftmenge von 14 Vol.-% bei 1 bar Absolutdruck und 20° C gelöst werden. Bei anderen Kraftstoffen kann sich dieser Faktor sogar noch erhöhen, beispielsweise 24% betragen, wobei die Löslichkeit insbesondere auch vom Druck und der Temperatur abhängt.

Dabei haben typische Übergabevorrichtungen für Flüssigkeiten häufig eine Konstruktion, welche eine Lösung der Gaseinschlüsse in der geförderten Flüssigkeit noch unterstützt. So ist der Gaseinschluss im Ansaugweg der Pumpe häufig bereits fein verteilt, da er in Form eines Blasenstrudels vorliegt. In der im Leitungsverlauf folgenden Pumpe, bei der es sich insbesondere um eine Kreiselpumpe handeln kann, wird der Gaseinschluss dann weiter zerschlagen und feinst dispergiert, was den Lösungsprozess weiter fördert. Da hinter der Pumpe ein erhöhter Druck aufgebaut ist, kann es unter Umständen zu einem zumindest annähernd vollständigen Lösen der Gaseinschlüsse kommen.

Demgemäß liegt also bei einem Verfahren zur Übergabe einer Flüssigkeit das Gas häufig zumindest teilweise nicht in freier Form vor, welche Luftblasen bildet, sondern ist in gelöster Form im Medium gebunden.

Der Löseprozess der Gaseinschlüsse kann die Fördermengenmessung in mehrerer Hinsicht beeinflussen. So nimmt einerseits das in Lösung gegangene Gas ein viel geringeres Volumen ein als dieselbe Menge freies, ungelöstes Gas, da die Gasmoleküle im gelösten Zustand deutlich dichter angeordnet werden können als im freien Zustand. In erster Näherung kann das in Lösung gegangene Gas sogar häufig volumenmäßig völlig vernachlässigt werden. Sein Volumenanteil ist somit "verschwunden". Gleichzeitig kann aber das gelöste Gas unter Umständen bei der Füllgradmessung weiterhin als Gasanteil sichtbar sein. Aus diesem Grunde bedeutet beispielsweise eine 5% Änderung von $\varepsilon_r$ in einem kapazitiven Füllgradsensor nicht automatisch, dass sich auch der (freie) Gasvolumenanteil entsprechend ändert. Wird aber der gemessene Füllgrad einfach mit dem gemessenen Durchfluss verrechnet, so wird unterstellt, dass das tatsächlich in Lösung gegangene Gas in freier Form vorhanden ist, das heißt es wird ein Flüssigkeitsanteil in der Leitung unterstellt, welcher geringer ist als der tatsächliche Flüssigkeitsanteil. Somit ist die tatsächlich abgegebene Flüssigkeitsmenge größer als die theoretisch berechnete Flüssigkeitsmenge.

Da die Löslichkeit des Gases in der Regel mit zunehmendem Druck zunimmt, hängt die tatsächlich vorhandene Masse des Gases nicht nur vom gemessenen Gasvolumen ab, sondern auch vom Druck, bei dem es dieses Volumen einnimmt. Der genannte Effekt, dass der bei Verrechnung der Füllgradwerte und der Durchflusswerte erhaltene Mengenwert vom tatsächlichen Volumen abweicht, tritt also insbesondere dann auf, wenn sich der Druck in der Anlage ändert, beispielsweise aufgrund von Pumpenwirkung. Dabei ist zu berücksichtigen, dass das gelöste Gas nach Entspannung, also nach einem Druckabfall, häufig nicht sofort austritt, sondern zunächst noch eine Weile in der Flüssigkeit verbleibt und sich nicht ausdehnt. Somit können gelöste Gasmengen die Messung auch dann beeinflussen, wenn die Messung in einem Bereich durchgeführt wird, in dem der Druck wieder erniedrigt ist.

Da die Masse des Gases überdies nicht nur vom Volumen sondern auch vom Druck abhängt, bei dem es dieses Volumen einnimmt, kann sich auch die Dichte der inkompressiblen Flüssigkeit ändern, was ebenfalls zu Fehlern führen kann.

Die Erfindung hat erkannt, dass Lösevorgänge der Gaseinschlüsse dazu führen können, dass die Verrechnung der Füllgradergebnisse und der Durchflussergebnisse zu einem theoretischen Mengenwert führt, welcher mit der tatsächlich abgegebenen Menge nicht genau übereinstimmt. Hier setzt die Erfindung an und lehrt, dass der durch Verrechnung von Füllgradwert und Durchflusswert erhaltene Fördermengenwert nicht unmittelbar als Maß für die übergebene Flüssigkeitsmenge herangezogen wird. Vielmehr wird der durch Verrechnung von Füllgradmessung und Durchflussmessung erhaltene Wert noch mit einem Wert korrigiert, der ein Lösen des Gaseinschlusses in der Flüssigkeit berücksichtigt. Durch diese Korrektur wird ein korrigierter Fördermengenwert erhalten, der dann als übergebene Flüssigkeitsmenge ausgegeben wird. Damit ist eine besonders hohe Messgenauigkeit gegeben.

Die Tatsache, dass gelöste Gasanteile bei der Übergabe von Kraftstoff tatsächlich eine Rolle spielen, wurde in einer Reihe von Versuchen bestätigt. So wurde zum Beispiel beobachtet, dass die Flüssigkeit trotz eines Anteils von 5 Vol.-% Luft völlig klar war, was auf eine vollständige Lösung hinweist. Ferner wurde ein Vollschlauch mit Medium, dem gezielt eine bestimmte Luftmenge beigemengt war, mit Druck gefüllt, und danach die austretende Menge in einer Waage entspannt. Dabei zeigte sich, dass das Flüssigkeitsvolumen, das nach dem Entspannen aus dem Schlauch ausgelaufen ist, nicht der Volumenänderung eines freien Gases bei der Entspannung entsprach, sondern deutlich geringer war. Hieraus kann geschlossen werden, dass ein Teil der Luft in Lösung gegangen ist und selbst nach dem Entspannen noch in Lösung geblieben ist und somit nicht an der Volumenausdehnung und Verdrängung der Flüssigkeit aus dem Schlauch teilgenommen hat. Das verbleibende austretende Flüssigkeitsvolumen kann dabei auch drauf zurückzuführen sein, dass sich der Vollschlauch beim Befüllen unter Druck ausgedehnt hat und beim Entspannen wieder seinen ursprünglichen Zustand eingenommen hat. Auch bei einer vollständigen Lösung der Luft kann somit unter Umständen ein Restvolumen aus dem Schlauch austreten.

Bei der Flüssigkeit, die erfindungsgemäß übergeben wird, kann es sich insbesondere um Kraftstoff, beispielsweise Heizöl, aber auch um Milch handeln. Die Flüssigkeit kann somit Kohlenwasserstoffe aufweisen. Der Gaseinschluss kann insbesondere ein Lufteinschluss sein. Zur Füllgradmessung ist zweckmäßigerweise ein Füllgradsensor vorgesehen.

Unter dem Füllgrad kann insbesondere der Flüssigkeitsanteil, vorzugsweise der relative Flüssigkeitsanteil, im Leitungsquerschnitt verstanden werden. Das heißt, bei einem Zweiphasensystem, bei dem lediglich Flüssigkeit und Gas vorhanden sind, beträgt der Füllgrad 100% minus des Gasanteils im Leitungsquerschnitt. Eine erfindungsgemäße Füllgradmesseinrichtung misst daher den Flüssigkeitsgehalt im Leitungsquerschnitt unabhängig davon, wo sich die Gaseinschlüsse befinden und ob eine zusammenhängende Grenzfläche zwischen Flüssigkeit und Gas gegeben ist. Hierzu sind kapazitive Füllgradmesseinrichtungen besonders geeignet.

Bei dem Fördermengenwert kann es sich um einen Volumenwert, aber auch um einen Förderratenwert handeln, das heißt um ein Volumen pro Zeiteinheit, welches dann zur Bestimmung der übergebenen Flüssigkeitsmenge noch über die Zeit integriert werden muss.

Soweit der Füllgrad den prozentualen Flüssigkeitsanteil im Leitungsquerschnitt enthält, kann zur Bestimmung des Fördermengenwertes das Ergebnis der Füllgradmessung in besonders einfacher Weise mit dem Ergebnis der Durchflussmessung multipliziert werden. Sofern die Füllgradmessung und die Durchflussmessung an unterschiedlichen Messpunkten stattfinden, kann durch eine geeignete Zeitfunktion sichergestellt werden, dass die miteinander verrechneten Werte der Füllgradmessung und der Durchflussmessung denselben Volumenanteil betreffen. Hierzu kann vorgesehen sein, fortlaufend Füllgradmessungen durchzuführen und diese mit einer "Schleppzeigerfunktion" zu beaufschlagen.

Insbesondere kann die Erfindung bei der Abgabe von Flüssigkeit aus einem Tank eines Tankfahrzeuges zum Einsatz kommen. Die Erfindung kann aber auch bei der Befüllung des Tankfahrzeuges vorgesehen sein. Grundsätzlich kann die Übergabe von einem beliebigen ersten Bereitstellungsort zu einem beliebigen zweiten Bereitstellungsort erfolgen, wobei es sich bei den Bereitstellungsorten jeweils insbesondere um einen Tank handeln kann.

Beim erfindungsgemäßen Messverfahren wird Luft, die sich im Messgut befindet, oder die während des Abgabevorgangs beigemischt wird, nicht wie bei Messanlagen mit Gasabscheider abgeschieden, sondern bei der Messung so verrechnet, dass das Messergebnis die vorgeschriebenen Fehlergrenzen einhält. Dabei wird berücksichtigt, dass in Mineralölen druckabhängig bis zu 14% Luft gelöst werden kann. Aus diesem Grunde wird das gemessene Volumen nicht einfach um einen Luftanteil verringert. Vielmehr wird eine, insbesondere druckabhängige, Korrektur eingeführt, welche sowohl den Einfluss des Drucks als auch die Auswirkung der durch die Luft veränderten Dichte auf die Durchflussmesseinrichtung berücksichtigt. Diese Korrektur gleicht die Abweichung der Volumenmessung durch Lufteinschlag und Druck aus.

Besonders bevorzugt ist es, dass die Flüssigkeit mittels einer Pumpe durch die Leitung gefördert wird, wobei die Pumpe auf ihrer Druckseite eine Druckerhöhung in der Leitung bewirkt, dass die Füllgradmessung auf der Druckseite der Pumpe durchgeführt wird, und dass die Durchflussmessung auf der Druckseite der Pumpe durchgeführt wird. Gemäß diesem Ausführungsbeispiel wird also die Messung im Bereich der Druckerhöhung durchgeführt, die typischerweise bis zu 8 bar betragen kann. Wie zuvor erläutert, kann mit der pumpenbedingten Druckerhöhung eine Zunahme des gelösten Gasanteiles einhergehen, was zur Folge haben kann, dass der durch Verrechnung von Gasanteilsmessung und Durchflussmessung erhaltene Fördermengenwert größer ist als die tatsächlich abgegebene Flüssigkeitsmenge. Bevorzugt ist es daher, dass der Fördermengenwert $V_{mes}$, der durch Verrechnung des Ergebnisses der Füllgradmessung mit dem Ergebnis der Durchflussmessung erhalten wird, zum Berücksichtigen des Lösens des Gaseinschlusses in der Flüssigkeit verringert wird, und so der korrigierte Fördermengenwert $V_{GES}$ erhalten wird. Diese Ausführungsform erkennt an, dass der tatsächliche Fördermengenwert in der Regel geringer ist als der theoretische Fördermengenwert, so dass $V_{GES} < V_{mes}$ ist.

Bei der Pumpe kann es sich insbesondere um eine Kreiselpumpe handeln, welche besonders gut zu entleeren ist. Einer Verschleppung von Flüssigkeit bei einem Produktwechsel und somit einer Produktverunreinigung kann daher entgegenwirkt werden.

Weiter ist es besonders bevorzugt, dass zur Durchflussmessung ein mittelbarer Volumenzähler, insbesondere ein Turbinenzähler verwendet wird. Auch ein Flügelradzähler kann vorgesehen sein. Derartige mittelbare Volumenzähler sind ebenfalls besonders einfach zu entleeren, was im Hinblick auf die Produktreinheit vorteilhaft ist.

Besonders vorteilhaft ist es, dass zur Füllgradmessung eine elektrische Messung durchgeführt wird. Grundsätzlich ist aber auch eine optische Messung denkbar. Sofern eine elektrische Messung durchgeführt wird, handelt es sich hierbei bevorzugt um eine Kapazitätsmessung oder/und gegebenenfalls auch eine Leitfähigkeitsmessung. Für eine Kapazitätsmessung sind zweckmäßigerweise Elektrodenplatten vorgesehen, die mit einer zeitlich variablen Spannung beaufschlagt werden. Einer kapazitiven Messung liegt der Gedanke zugrunde, dass Gaseinschlüsse in der Regel eine andere Dielektrizitätszahl aufweisen als die Flüssigkeit und sich somit die Dielektrizitätszahl des zwischen den Platten angeordneten Mediums mit dem Gasanteil ändert (Heizöl hat ein $\varepsilon_r$ von ca. 2, Luft ein $\varepsilon_r$ von ca. 1, wobei der genaue Wert druckabhängig sein kann). Zur Füllgradbestimmung wird die Kapazität zwischen den Elektrodenplatten oder eine hiermit korrelierte Messgröße, beispielsweise die Dielektrizitätszahl erfasst, und diese durch geeignete Methoden mit dem Füllgrad in Beziehung gesetzt. Eine für die Füllgradmessung verwendete Füllgradmesseinrichtung kann insbesondere wie im deutschen Gebrauchsmuster DE 20 2004 019 442, in der deutschen Patentanmeldung DE 10 2005 005 295 A1 und/oder in der PCT-Anmeldung WO 2008/106989 A1 beschrieben ausgeführt sein. Die elektrische Füllgradmesseinrichtung kann insbesondere eine Vielzahl von Elektrodenplatten aufweisen, welche in einer Interdigitalstruktur ineinandergreifen.

Vorzugsweise ist die Füllgradmesseinrichtung oberstromig, das heißt in Strömungsrichtung vor der Durchflussmesseinrichtung in Leitungsverlauf angeordnet.

Weiterhin ist es vorteilhaft, dass vom Fördermengenwert $V_{mes}$, der durch Verrechnung des Ergebnisses der Füllgradmessung mit dem Ergebnis der Durchflussmessung erhalten wird, ein Korrekturwert, insbesondere ein Korrekturvolumen, $V_{KL}$ abgezogen wird. Bei dem Korrekturwert $V_{KL}$ kann es sich insbesondere um einen Korrekturwert für Luftanteile handeln. Der korrigierte Fördermengenwert $V_{GES}$, welcher dem geförderten Gesamtvolumen entspricht, ergibt sich also aus dem berechneten Fördermengenwert $V_{mes}$ und dem Korrekturwert $V_{KL}$:

$$V_{GES} = V_{mes} - V_{KL}$$

Überraschenderweise hat sich gezeigt, dass besonders genaue Messwerte dadurch erhalten werden können, dass der Fördermengenwert ($V_{mes}$), der durch Verrechnung des Ergebnisses der Füllgradmessung mit dem Ergebnis der Durchflussmessung erhalten wird, zum Berücksichtigen des Lösens des Gaseinschlusses in der Flüssigkeit mit einem Zählerfaktor (TF) verrechnet wird. Zweckmäßigerweise wird der Korrekturwert $V_{KL}$ durch Verrechnung, insbesondere Multiplikation, des berechneten Fördermengenwerts $V_{mes}$ oder/und eines gemessenen Luftvolumens $V_L$ mit dem Zählerfaktor TF ermittelt. Es hat sich überraschenderweise gezeigt, dass hierdurch die Einflüsse des Lösungsvorgangs des Gases in besonders einfacher und zugleich genauer Weise berücksichtigt werden können. Es kann also vorgesehen sein, dass

$$V_{KL} = TF \cdot V_{mes}$$

In diesem Fall gibt TF die relative Abweichung zwischen $V_{GES}$ und $V_{mes}$ wieder:

$$TF = (V_{mes} - V_{GES}) / V_{mes}.$$

Der Korrekturwert $V_{KL}$ kann aber auch durch Verrechnung, insbesondere Multiplikation, eines gemessenen Luftvolumens $V_L$ mit dem Zählerfaktor TF ermittelt werden, so dass

$$V_{KL} = TF \cdot V_L$$

Sofern zur Durchflussmessung ein Turbinenzähler verwendet wird, kann der Zählerfaktor TF auch als Turbinenfaktor bezeichnet werden. Insbesondere kann der Zählerfaktor TF abhängig vom Druck in der Leitung und dem Signal der Füllgradgradmesseinrichtung, also dem Füllgrad beziehungsweise dem Gasanteil sein.

Sofern die Füllgradmessung und die Durchflussmessung auf der Druckseite einer Pumpe durchgeführt, wird der Korrekturwert $V_{KL}$, der vom Fördermengenwert $V_{mes}$ abgezogen wird, und/oder der Zählerfaktor TF in der Regel positiv sein, da der theoretische Fördermengenwert $V_{mes}$ wie oben erläutert in der Regel größer sein wird als die tatsächlich abgegebene Menge.

Besonders zweckmäßig ist es, dass eine Druckmessung in der Leitung durchgeführt wird, und dass der Korrekturwert $V_{KL}$ und/oder der Zählerfaktor TF aus einem Ergebnis der Druckmessung und/oder einem Ergebnis der Füllgradmessung ermittelt wird. Gemäß dieser Ausführungsform wird die Höhe der Korrektur also davon abhängig gemacht, welcher Füllgrad beziehungsweise Gasanteil und welcher Druck gemessen werden. Sofern eine Pumpe vorgesehen ist, wird die Druckmessung zweckmäßigerweise auf der Druckseite der Pumpe in der Leitung durchgeführt. Vorzugsweise wird die Druckmessung im Bereich der Durchflussmesseinrichtung und/oder der Füllgradmesseinrichtung durchgeführt. Insbesondere kann ein hierzu erforderlicher Drucksensor in Strömungsrichtung hinter einer oder beider der genannten Messeinrichtungen angeordnet sein.

Eine weitere bevorzugte Ausführungsform der Erfindung liegt darin, dass der Korrekturwert $V_{KL}$, der vom Fördermengenwert $V_{mes}$ abgezogen wird, mit zunehmendem Druck und/oder abnehmendem gemessenem Gasanteil zu betragsmäßig kleineren Werten reduziert wird. Weiterhin ist es vorteilhaft, dass der Zählerfaktor TF mit zunehmendem gemessenem Druck in der Leitung zu betragsmäßig kleineren Werten reduziert wird.

Diesen Ausführungsformen liegen Experimente zugrunde, in denen sich überraschenderweise gezeigt hat, dass ein Korrekturwert $V_{KL}$, der mit zunehmendem Druck und abnehmendem Gasanteil von einem positiven Wert in Richtung 0 hin sinkt, besonders repräsentative Messwerte liefert. Unter dem Druck und dem Gasanteil wird dabei der Druck und der Gasanteil in der Leitung, insbesondere im Bereich der Messeinrichtungen für Füllgrad und Durchfluss verstanden. Der Gasanteil wird zweckmäßigerweise im Rahmen der Füllgradmessung und/oder mit der Füllgradmesseinrichtung bestimmt. Sofern lediglich eine Gasphase und eine Flüssigphase gegeben ist, beträgt der relative Gasanteil 100 % abzüglich dem relativen Füllgrad, d.h. Gasanteil und Füllgrad addieren sich zu 100 %.

Ein rechentechnisch besonders einfaches Ausführungsbeispiel ist dadurch gegeben, dass der Zählerfaktor mittels einer linearen Funktion ermittelt wird, in welche der gemessene Druck und/oder der gemessene Gasanteil linear eingehen. Insbesondere kann somit der Zählerfaktor TF folgendermaßen bestimmt werden:

$$TF \propto (K \cdot L), \text{ insbesondere } TF = K \cdot L$$

wobei L der gemessene Gasanteil in % ist, und K ein druckabhängiger Faktor. In Experimenten hat sich gezeigt, dass es im Hinblick auf genaue Messwerte besonders zweckmäßig ist, als druckabhängigen Faktor K einen linear vom Druck abhängigen Wert zu wählen, wobei K insbesondere mit zunehmendem Druck abnimmt.

Im Hinblick auf die Messgenauigkeit besonders vorteilhaft ist es weiterhin, dass der Zählerfaktor mittels einer im Gasanteil L quadratischen Funktion ermittelt wird, in welche der gemessene Gasanteil quadratisch und vorzugsweise der gemessene Druck linear eingehen. Der Zählerfaktor TF kann also folgendermaßen ermittelt werden:

$$TF \propto (DF \cdot L^2 + K \cdot L),$$

wobei L der gemessene Luftanteil in % ist, DF ein Druckfaktor und K ein parametrierbarer Faktor. In Experimenten hat sich gezeigt, dass besonders genaue Messergebnisse dann erhalten werden können, wenn der Druckfaktor DF als lineare Funktion des gemessenen Drucks gewählt wird, wobei DF mit zunehmendem Druck abnimmt. Der parametrierbare Faktor K kann druckunabhängig und gegebenenfalls auch anlagenunabhängig gewählt werden.

Im Hinblick auf die Messgenauigkeit ist weiterhin vorteilhaft, dass als Zählerfaktor TF ein Mittelwert, insbesondere ein volumengewichteter Mittelwert, verwendet wird. Demgemäß kann der Zählerfaktor TF wie folgt bestimmt werden:

$$TF = \sum (TF_a \cdot V_T) / V_{akt},$$

wobei $TF_a$ der aktuelle Zählerfaktor, $V_T$ das Teilvolumen und $V_{akt}$ das bis zum Berechnungszeitpunkt aufgelaufene Volumen ist. Insbesondere kann der Turbinenfaktor als volumenproportionaler Mittelwert, beispielsweise mindestens zweimal je Sekunde, während der Abgabe berechnet werden.

Überdies ist es vorteilhaft, dass während der Übergabe eine Plausibilitätsuntersuchung einzelner Messwerte, insbesondere des Fördermengenwertes oder/und des korrigierten Fördermengenwertes, durchgeführt wird, und dass die Übergabe abgebrochen wird, wenn das Ergebnis nicht plausibel erscheint.

Ferner ist es zweckmäßig, dass die Übergabe abgebrochen wird, wenn der im Rahmen der Füllgradmessung ermittelte Gasanteil einen bestimmten Wert überschreitet, beziehungsweise der Füllgrad einen bestimmten Wert unterschreitet. Im Anschluss an den Abbruch ist vorzugsweise vorgesehen, das System, insbesondere die Leitung, zu entleeren. Zwar beruht die Erfindung auf dem Prinzip, dass das im Rahmen der Durchflussmessung ermittelte Volumen mit Hilfe des Luftwertes aus dem Füllgradsensor korrigiert wird, so dass nach der Erfindung korrekte Messungen grundsätzlich auch bei sehr hohen Gasanteilen durchgeführt werden können. Da die Gaseinschlüsse nach der Erfindung messtechnisch erfasst werden, ist es insbesondere nicht erforderlich, die Strömungsgeschwindigkeit beispielsweise durch Regulierung einer Pumpe oder eines Ventiles zu reduzieren, wenn der Gasanteil zunimmt. Treten jedoch sehr hohe Gasanteile auf, so kann dies auf einen Systemdefekt, beispielsweise eine Leckage, hinweisen, die einen Bedienereingriff erforderlich macht. Von daher kann es vorteilhaft sein, die Übergabe und die Messung abzubrechen, wenn sehr hohe Gasanteile gemessen werden.

Beispielsweise kann vorgesehen sein, die Übergabe und/oder die Messung bei Erreichen eines Gasvolumenanteils von ca. 5% auf der Druckseite der Pumpe abzubrechen. Bei einer Druckdifferenz durch die Pumpe von 5 bar entspricht dies auf der Saugseite einem Gasanteil von ca. 25%, da die Gasblasen durch Druckerhöhung im Volumen reduziert werden. Ein saugseitiger Gasanteil von 25% ist aber sehr hoch und deutet auf einen Systemdefekt hin. Auch eine Kreiselpumpe würde bei einem derartigen Gasanteil keine nennenswerte Förderleistung mehr erbringen.

Alternativ oder zusätzlich kann auch vorgesehen sein, dass die Übergabe abgebrochen wird, dass also der Volumenstrom unterbrochen wird, wenn der gemessene Füllgrad und/oder der gemessene Gasanteil einen Sättigungswert erreicht. Gemäß dieser Ausführungsform kann sichergestellt werden, dass auf der Druckseite der Pumpe möglichst keine oder nur sehr wenig freie Luft vorhanden ist, denn wenn der Gasanteil so sehr ansteigt, dass keine weitere Lösung mehr möglich ist, wird die Abgabe unterbrochen. Somit kann sichergestellt werden, dass keine oder nur sehr wenig freie Luft in den Vollschlauch gelangt. Dies wiederum erlaubt es, dass die Flüssigkeit über einen Vollschlauch abgegeben wird und dass ein Flüssigkeitsvolumen im Inneren des Vollschlauchs bei der Bestimmung der übergebenen Flüssigkeitsmenge als konstant angenommen wird. Handelt es sich bei der Flüssigkeit um Öl und bei dem Gas um Luft, kann beispielsweise bei einem Luftanteil von 3% bei 4 bar und 20° C abgebrochen werden, was einer Luftmenge von < 14 Vol.-% bei 1 bar Absolutdruck und 20° C entspricht, und etwa die Sättigungsgrenze der Luft in Ölen wiedergibt.

Bei der Abgabe von Flüssigkeit mit gelöster Luft über einen Vollschlauch können drei Fälle unterschieden werden, wobei für die weiteren Betrachtungen beispielhaft von einer Abgabe der Mindestabgabemenge, beispielsweise 200 l, also dem kritischsten Fall ausgegangen wird.

Im Fall 1 bekommt der Kunde 200 l ohne Luftbeimengungen. Dies ist der einfachste Fall. Der Vollschlauch ist nach der Abgabe vollständig mit Medium ohne Luftanteil gefüllt. Es sind dann keinerlei (Luft-)Korrekturen notwendig.

Im anschließenden Fall 2 erhält der Kunde 200 l mit beispielsweise 3% Luftbeimengungen (bei beispielsweise 4 bar Pumpendruck). Dabei erhält der Kunde zunächst ca. 50 l aus dem Vollschlauch ohne Luftanteil. Dann erhält er 150 l aus dem System mit Luftbeimengungen. Der Luftanteil dieser 150 l wird über den Füllgradsensor mit dem erfindungsgemäßen Zählerfaktor (ca. 1 % des Vollschlauchvolumens) korrigiert und dem Kunden zusammen mit den ca. 50 l ohne Luftanteil aus dem Vollschlauch verrechnet. Nach dem Ende der Abgabe ist der Vollschlauch mit Luftbeimengungen gefüllt.

Im anschließen Fall 3, bei der Belieferung des darauf folgenden Kunden mit demselben Schlauch, muss der Luftanteil im Vollschlauch unter Umständen berücksichtigt werden. Durch den Lösungsprozess wirkt sich die im Fall 2 zugesetzte Luft nur mit knapp 1% (Volumen) im Vollschlauch aus, das heißt der Vollschlauch hat einen Volumenanteil von 1 % Luft. Dies ist bei einem Gesamtschlauchinhalt von ca. 50 l nur knapp 0,5 l. Dieser Betrag muss grundsätzlich bei der Belieferung des Kunden von der zu verrechnenden Menge abgezogen werden. Aufgrund des relativ geringen Einflusses der im Vollschlauch gespeicherten Luft auf die zu bestimmende Gesamtmenge (im kritischsten Fall der Mindestabgabemenge) kann der Vollschlauchinhalt jedoch bei der Berechnung unter Umständen fest mit 50 l angesetzt werden und als nicht parametrierbar vorgesehen werden.

Grundsätzlich ist es also erforderlich, dass der dem entsprechenden Schlauch zuzuordnende Volumenanteil berücksichtigt und gegebenenfalls beim nächsten Kunden gutgeschrieben wird. Da diese Mengen allerdings vergleichsweise klein sein können, kann das Schlauchvolumen unter Umständen als konstant angesetzt werden. Wird an Stelle eines Vollschlauchs ein Leerschlauch verwendet, so ist keine Verrechnung des Schlauchinhaltes erforderlich, da der Schlauch am Ende der Abgabe vollständig entleert wird.

Soll die in den Vollschlauch eingetragene Luftmenge berücksichtigt werden, so kann vorgesehen werden, diese in Zeitintervallen von beispielsweise 0,5 s unter Berücksichtigung des jeweiligen Luftanteils und der jeweiligen Intervallmenge zu erfassen und mit dem jeweiligen Zählerfaktor zu bewerten und für die Berücksichtigung bei der nächsten Vollschlauchabgabe über denselben Schlauch zwischenzuspeichern. Somit kann für den nächsten Kunden der Luftanteil der zuletzt abgegebenen Flüssigkeitsmenge, die zum Ende der Abgabe im Vollschlauch enthalten ist, registriert werden.

Da Durchflussmessgeräte, insbesondere Turbinenzähler, viskositäts- und/oder temperaturabhängig sein können, kann vorgesehen sein, an den Messwerten der Durchflussmessung eine Viskositätskorrektur und/oder eine Temperaturkorrektur vorzunehmen, insbesondere bevor die Werte mit dem Ergebnis des Füllgradsensors verrechnet werden.

Bei einer erfindungsgemäßen Vorrichtung, welche insbesondere zur Durchführung des erfindungsgemäßen Verfahrens eingesetzt werden kann, ist die Recheneinrichtung so eingerichtet, dass der Fördermengenwert $V_{mes}$, der durch Verrechnung der Messergebnisse der Füllgradmesseinrichtung mit den Messergebnissen der Durchflussmesseinrichtung erhalten wird, mit einem, insbesondere druckabhängigen, Wert korrigiert wird, der ein Lösen des Gaseinschlusses in der Flüssigkeit berücksichtigt, wodurch ein korrigierter Fördermengenwert $V_{GES}$ erhalten wird, und ist die Recheneinrichtung so eingerichtet, dass der korrigierte Fördermengenwert $V_{GES}$ als Maß für die übergebene Flüssigkeitsmenge ausgegeben wird. Die Vorrichtung kann somit den Anteil des gelösten Gases ermitteln und das Messergebnis des Turbinenzählers druckabhängig kompensieren.

Eine grundlegende Erkenntnis, auf welcher die Erfindung beruht, besteht darin, dass die Gaseinschlüsse druckabhängig in Lösung gelangen, was die Volumenmessung beeinflussen kann, unter anderem weil die gelösten Anteile nicht mehr dasselbe Volumen einnehmen wie freie Anteile. Um hieraus potenziell resultierenden Messungenauigkeiten entgegenzuwirken, schlagen die zuvor genannten Ausführungsbeispiele eine Kompensationsrechnung auf Basis einer Druckmessung vor. Ein alternativer Weg zur Berücksichtigung des genannten Aspektes besteht jedoch darin, dass die Durchflussmesseinrichtung, die zusätzlich zur Füllgradmesseinrichtung vorgesehen ist, ein unmittelbarer Volumenzähler, insbesondere ein Verdrängungszähler, ist. Gemäß diesem Erfindungsaspekt wird der Lösungseffekt apparativ berücksichtigt. Denn ein Verdrängungszähler misst volumenproportional richtig, das heißt es kann ausreichend sein, die Ergebnisse des Verdrängungszählers mit den Ergebnissen der Füllgradmesseinrichtung zu verrechnen, wobei in die Berechnung auch noch ein in der Leitung gemessener Druck einfließen kann. Bei der Füllgradmesseinrichtung kann es sich in diesem Fall ebenfalls um einen elektrischen, insbesondere kapazitiven, Füllgradsensor oder aber auch um einen optischen Sensor handeln. Zum Herausrechnen des tatsächlichen Luftanteils werden in diesem Fall eine Füllgradmesseinrichtung und ein Drucksensor benötigt.

Die Erfindung wird nachfolgend anhand bevorzugter Ausführungsbeispiele näher erläutert, die schematisch in den beiliegenden Figuren dargestellt sind. In den Figuren zeigen:

Fig. 1 ein Messdiagramm für eine Volumenmessung mit einer Messturbine ohne die erfindungsgemäße Korrektur von Gaslösungseffekten;

Fig. 2 eine schematische Ansicht eines ersten Ausführungsbeispiels einer Vorrichtung zur Durchführung des erfindungsgemäßen Verfahrens;

Fig. 3 eine schematische Ansicht eines zweiten Ausführungsbeispiels einer Vorrichtung zur Durchführung des erfindungsgemäßen Verfahrens, und

Fig. 4 eine Detailansicht des Verteiler- und Sensorkopfes der Vorrichtung aus Fig. 3.

Im Rahmen der Erfindung wurden Messreihen durchgeführt, bei denen das theoretische Übergabevolumen $V_{mes}$ durch Verrechnung der Füllgradmesswerte und Durchflussmesswerte bestimmt wurde, ohne eine erfindungsgemäße Korrektur zur Berücksichtigung der Lösung von Gaseinschlüssen in der Flüssigkeit vorzunehmen. Diese theoretischen Volumina wurden mit den tatsächlich übergebenen Volumina verglichen. Hierbei wurden Volumenabweichungen festgestellt, wobei das theoretisch berechnete Volumen größer war als das tatsächlich übergebene Volumen.

Im Rahmen der Messreihen ermittelte relative Volumenabweichungen ("Zunahme Volumenmessung") sind in Fig. 1 über dem Luftanteil in der Leitung ("Luftanteil Mittelwert") bei verschiedenen Drücken in der Leitung aufgetragen. Wie Fig. 1 zeigt, nahm der relative Messfehler mit zunehmendem Luftanteil und abnehmendem Druck zu.

Die in Fig. 1 dargestellte, empirisch ermittelte Zunahme der Volumenmessung kann mit negativen Vorzeichen den erfindungsgemäßen Korrekturfaktor TF bilden, welcher zur Berechnung des korrigierten Volumens herangezogen werden kann.

Es hat sich gezeigt, dass die Messpunkte der Fig. 1 mit einer linearen Näherung beschrieben werden können, wobei

$$\text{(Zunahme Volumenmessung)} = K \cdot \text{(Luftanteil Mittelwert)}$$

ist. Der Faktor K, also die Steigung der einzelnen Geraden, hängt dabei linear vom Druck ab und nimmt mit diesem Druck ab.

Somit kann bei einer linearen Näherung die Druckabhängigkeit in Form von zwei Wertepaaren ermittelt werden, die in der Messanlage hinterlegt sind. Es hat sich gezeigt, dass diese Werte nicht anlagenabhängig sind.

Eine genauere Modellierung der Messpunkte "Zunahme Volumenmessung" kann durch Polynome zweiten Grades erhalten werden. Insbesondere kann die Zunahme wie folgt berechnet werden:

$$(\text{Zunahme Volumenmessung}) = DF \cdot (\text{Luftanteil})^2 + K \cdot (\text{Luftanteil}),$$

wobei DF ein Druckfaktor ist, welcher mit zunehmendem Druck linear abnimmt, und K ein parametrierbarer Faktor ist, der in der Regel konstant ist. Für eine hinreichend genaue Näherung muss somit lediglich der Faktor DF für den quadratischen Anteil in Abhängigkeit vom Druck variiert werden, wohingegen der Faktor K druckkonstant sein kann.

Zur erfindungsgemäßen Korrektur des Volumenwertes $V_{mes}$, welcher durch Verrechnung der Messwerte des Füllgradsensors und der Messturbine erhalten wird, kann somit eine quadratische Korrekturrechnung vorgesehen werden. Der in der quadratischen Korrekturrechnung ermittelte Wert ist der tatsächliche Volumenanteil im Heizöl, der nunmehr vorzeichenrichtig von der luftdurchsetzten Produktmenge subtrahiert werden muss. Die quadratische Korrektur kann auch damit zusammenhängen, dass das Messergebnis der Turbine von der Dichte des anströmenden Mediums abhängig ist, sowie von der Kompressibilität des Mediums.

Ein erstes Ausführungsbeispiel einer Vorrichtung zur Durchführung des erfindungsgemäßen Verfahrens ist in Fig. 2 dargestellt. Auf der Druckseite einer Pumpe 9 ist eine Leitung 10 vorgesehen. Entlang der Leitung 10 sind mit zunehmendem Abstand von der Pumpe 9 ein Temperatursensor 65, eine Füllgradmesseinrichtung 6, eine Durchflussmesseinrichtung 7 sowie ein Drucksensor 68 angeordnet. Die Messeinrichtungen 65, 6, 7 und 68 stehen mit einer Recheneinrichtung 100 in Signalverbindung, welche mehrere Untereinheiten 101 bis 105 aufweist.

In der Untereinheit 101 findet eine Viskositätskorrektur des Volumenwertes statt, welcher von der als Messturbine ausgebildeten Durchflussmesseinrichtung 7 erhalten wird. Die Viskositätskorrektur erfolgt temperaturabhängig auf Grundlage der Daten des Temperatursensors 65 und gegebenenfalls des eingestellten (vorgegebenen) Produktes.

Aus der Untereinheit 101 resultierende Volumendaten werden in der Untereinheit 102 dynamisch liniarisiert, wobei insbesondere fünf Korrekturfaktoren vorgesehen sein können.

In der Untereinheit 104 findet eine Temperaturkorrektur des Signals des Füllgradsensors 6 auf Grundlage des Signals des Temperatursensors 65 statt.

In der Untereinheit 103 werden die viskositätskorrigierten und dynamisch liniarisierten Messwerte der Durchflussmesseinrichtung 7 mit den temperaturkorrigierten Messwerten des Füllgradsensors 6 verrechnet. Gleichzeitig wird zur Berücksichtigung gelöster Gaseinschlüsse eine Gaskorrektur auf Grundlage der Druckwerte des Drucksensors 68 durchgeführt. In diesem Funktionsblock wird also das gemessene, viskositäts- und durchflusskorrigierte Volumen mit Hilfe des Luftwertes aus dem Füllgradsensor 6 korrigiert.

In der Untereinheit 105 wird das nun reine Produktvolumen schließlich auf das Volumen bei 15° C umgerechnet.

Ein weiteres Ausführungsbeispiel einer erfindungsgemäßen Vorrichtung zur Durchführung des erfindungsgemäßen Verfahrens ist in Fig. 3 und im Detail in Fig. 4 dargestellt. Der Übersichtlichkeit halber ist in diesen Figuren die Recheneinrichtung 100 mit ihren Untereinheiten 101 bis 105 nicht dargestellt. Die Recheneinrichtung 100 kann jedoch in gleicher Weise wie in Fig. 2 dargestellt ausgeführt sein.

Gemäß dem Ausführungsbeispiel der Figuren 3 und 4 ist ein Tank 1 vorgesehen, an dem bodenseitig ein als Bodenventil ausgebildetes Tankventil 2 angeordnet ist. Über das Tankventil 2 steht der Tank 1 mit einer Sammelleitung 3 in Fluidverbindung, die in Fig. 3 lediglich abschnittsweise dargestellt ist. An dieser Sammelleitung 3 können über weitere Tankventile weitere Tanks angeordnet sein.

Die erfindungsgemäße Vorrichtung weist eine Leitung 10 auf, die in ihrem tankseitigen Endbereich 11 mit der Sammelleitung 3 und somit mit dem Tank 1 in Fluidverbindung steht. In ihrem gegenüberliegenden, abgabeseitigen Endbereich 12 weist die Leitung 10 zwei Abgabeöffnungen 30, 30' auf.

Die Leitung 10 weist eine Reihe von jeweils angrenzenden Leitungsbereichen 13, 14, 15, 16 und 17 auf, die jeweils eine unterschiedliche Orientierung bezüglich der Horizontalen aufweisen. Der erste Leitungsbereich 13, über den die Leitung 10 mit dem Tank 1 in Verbindung steht, nimmt mit zunehmendem Abstand vom Tank 1 und dem tankseitigen Endbereich 11 in seiner Höhe ab. Im dargestellten Ausführungsbeispiel 13 ist er senkrecht verlaufend dargestellt. An den ersten Leitungsbereich 13 schließt sich ein zweiter Leitungsbereich 14 an, in welchem die Leitungshöhe mit zunehmendem Abstand vom tankseitigen Endbereich 11 zunimmt. An den zweiten Leitungsbereich 14 schließt sich ein dritter Leitungsbereich 15 an, der im Wesentlichen waagerecht verläuft. An diesen dritten Leitungsbereich 15 schließt sich wiederum ein vierter Leitungsbereich 16 an, welcher schräg gegenüber der Horizontalen verläuft und in welchem die Leitungshöhe mit zunehmendem Abstand vom tankseitigen Endbereich 11 abnimmt. An diesen vierten Leitungsbereich 16 schließt sich wiederum ein fünfter Leitungsbereich 17 an, in welchem die Leitung 10 wieder zumindest annähernd waagerecht verläuft, und in welchem der abgabeseitige Endbereich 12 ausgebildet ist.

Zwischen dem ersten Leitungsbereich 13 und dem zweiten Leitungsbereich 14 ist ein unterer Scheitelbereich 18 der Leitung 10 ausgebildet. Der dritte Leitungsbereich 15 bildet einen oberen Scheitelbereich 19 der Leitung 10.

Im unteren Scheitelbereich 18 ist an der Leitung 10 eine Pumpe 9 zur Förderung von Flüssigkeit aus dem Tank 1 vorgesehen. Im weiteren Verlauf der Leitung 10, also mit zunehmendem Abstand vom tankseitigen Endbereich 11 hin, ist in der Leitung 10 ein Verteiler 21 vorgesehen. An diesen Verteiler 21 schließt sich im weiteren Verlauf der Leitung 10 ein Leitungsabsperrventil 20 an. An das Leitungsabsperrventil 20 schließt sich im weiteren Leitungsverlauf wiederum ein Benetzungssensor 22 an. Der Verteiler 21, das Leitungsabsperrventil 20 und der Benetzungssensor 22 sind im waagerechten dritten Leitungsbereich 15 angeordnet.

Im weiteren Verlauf der Leitung 10, also mit weiter zunehmendem Abstand vom tankseitigen Endbereich 11 schließt sich hieran ein Sieb 23, gefolgt von einer Füllgradmesseinrichtung 6, gefolgt von einem Strömungsgleichrichter 24, gefolgt von einer Durchflussmesseinrichtung 7, gefolgt von einem Ventil 25 an. Die Elemente 23, 6, 24, 7 und 25 sind dabei im schräg verlaufenden vierten Leitungsbereich 16 angeordnet.

Die Füllgradmesseinrichtung 6 arbeitet kapazitiv und weist einen im Leitungsquerschnitt angeordneten Kondensatorplattenstapel auf, der elektrisch zum Messen des Füllgrades verwendet wird, und der andererseits auch als Strömungsgleichrichter fungieren kann. Der Strömungsgleichrichter 24 ist als Rohrbündelströmungsgleichrichter ausgebildet. Die Durchflussmesseinrichtung 7 ist als mittelbarer Volumenzähler, nämlich als Messturbine ausgebildet. Das Ventil 25 ist als Multifunktionsventil ausgebildet, das zwei Durchflussgeschwindigkeiten ermöglicht.

An das Ventil 25 und an den vierten Leitungsbereich 16 schließen sich im weiteren Verlauf der Leitung 10 mit zunehmenden Abstand vom tankseitigen Endbereich 11 ein weiterer Benetzungssensor 27 sowie die beiden Abgabeöffnungen 30, 30' an. Die Abgabeöffnungen 30, 30' sind im waagerechten fünften Leitungsbereich 17 angeordnet. Vorzugsweise ist auch der Benetzungssensor 27 im waagerechten fünften Leitungsbereich 17 angeordnet. An den Abgabeöffnungen 30 bzw. 30' ist über jeweils ein Abgabeventil 31 bzw. 31' ein Schlauchanschluss 32 bzw. 32' für einen Vollschlauch bzw. einen Leerschlauch vorgesehen.

Der vierte Leitungsbereich 16 mit der Messstrecke sowie der zweite Leitungsbereich 14 sind schräg vorgesehen, damit diese Leitungsbereiche beim Befüllen selbständig entgasen können, wobei sich das Gas im dazwischen liegenden dritten Leitungsbereich 15 im Bereich des Verteilers 21 sammelt.

Zum Entgasen der Anlage im dritten Leitungsbereich 15 beim Befüllen ist eine Entlüftungseinrichtung 60 vorgesehen. Die Entlüftungseinrichtung 60 weist eine Entlüftungsleitung 61 auf, welche über ein gemeinsames Leitungsstück 63 am Verteiler 21 an der Leitung 10 angeschlossen ist. An ihrem der Leitung 10 abgewandten Ende führt die Entlüftungsleitung 61 in den Tank 1 oder in einen nicht dargestellten Zwischenbehälter. Im Verlauf der Entlüftungsleitung 61 ist ein Entlüftungsventil 62 vorgesehen.

Zum Entresten der Anlage, d.h. zum Entleeren der Leitung 10 im Rahmen eines Produktwechsels ist eine Zuführeinrichtung 40 für Gas vorgesehen. Diese Zuführeinrichtung 40 weist eine Zuführleitung 41 auf, welche mit dem gemeinsamen Leitungsstück 63 verbunden ist. Die Zuführleitung 41 steht mit einer nicht dargestellten Druckgasvorrichtung in Verbindung, so dass über die Zuführleitung 41 am Verteiler 21, mithin am dritten Leitungsbereich 15 und am oberen Scheitelbereich 19, Druckgas in die Leitung 10 einbringbar ist. Zur Steuerung der Druckgaszufuhr ist in der Zuführleitung 41 ein Ventil 42 vorgesehen.

Die Vorrichtung der Figuren 3 und 4 weist ferner eine Entrestungsleitung 50 auf, die an einer Abzweigung 51 an der tankzugewandten Seite des Leitungsabsperrventils 20 von der Leitung 10 abzweigt und an einer Einmündung 52 auf der tankabgewandten Seite des Leitungsabsperrventils 20 wieder in die Leitung 10 einmündet. Im Bereich der Abzweigung 51 ist an der Entrestungsleitung 50 ein weiterer Benetzungssensor 54 vorgesehen. Überdies ist an der Entrestungsleitung 50 ein Entrestungsabsperrventil 53 vorgesehen. Optional kann in der Entrestungsleitung 50 auch eine Pumpe 99 angeordnet sein.

Zwischen dem ersten Leitungsbereich 13, welcher vom Tank 1 nach unten zur Pumpe 9 verläuft, und dem zweiten Leitungsbereich 14, welcher zur Zuführeinrichtung 40 hin in seiner Höhe zunimmt, ist eine Ausgleichsleitung 90 mit einem Ventil 91 vorgesehen. Diese Ausgleichsleitung 90 bildet zum Zwecke der nicht schäumenden Entrestung oberhalb des unteren Scheitelbereichs 18 eine Umgehung des unteren Scheitelbereichs 18.

Am Verteiler 21 ist ein weiterer Benetzungssensor 66 vorgesehen. Überdies ist am Verteiler 21 ein Temperatursensor 65 zur Erfassung der Temperatur der in der Leitung 10 fließenden Flüssigkeit vorgesehen.

Ein erster Drucksensor 67 ist zwischen dem tankseitigen Endbereich 11 und der Durchflussmesseinrichtung 7, bevorzugt zwischen dem Sieb 23 und der Durchflussmesseinrichtung 7, insbesondere zwischen der Füllgradmesseinrichtung 6 und dem Strömungsgleichrichter 24 angeordnet. Ein weiterer Drucksensor 68 kann zwischen der Durchflussmesseinrichtung 7 und dem abgabeseitigen Endbereich 12 vorgesehen sein. Der Drucksensor 67, gegebenenfalls in Verbindung mit dem weiteren Drucksensor 68, kann bei Kenntnis der Förderleistung der Pumpe 9 und gegebenenfalls der aktuell gemessenen Fließgeschwindigkeit des Produktes ebenfalls zur Bestimmung der Viskosität verwendet werden und daraus abgeleitet entsprechend der Messwert für das abgegebene Volumen korrigiert werden. Überdies ist am Verteiler 21 ein Drucksensor 67' zur Messung des in der Leitung 10 herrschenden Drucks vorgesehen.

Am abgabeseitigen Endbereich 12 der Leitung 10, insbesondere an einer Endplatte der Leitung 10, ist eine weitere Entlüftungseinrichtung 70 vorgesehen. Diese weist eine Entlüftungsleitung 71 auf, die einerseits mit der Leitung 10 und andererseits mit einem Behälter 73 in Leitungsverbindung steht, und an der ein Ventil 72 angeordnet ist.

Die Vorrichtung weist ferner ein bevorzugt zweiachsiges Inklinometer 4 auf, das insbesondere fest mit dem waagerechten Teil eines Tankfahrzeuges verbunden sein kann, und welches zur Steuerung der Entlüftungseinrichtung 70 dienen kann.

An den Schlauchanschlüssen 32, 32' ist jeweils eine druckluftbeaufschlagte Belüftungsleitung 36, 36' angeordnet, in denen jeweils ein Ventil 37 bzw. 37' angeordnet ist.

Beim Betrieb der Vorrichtung der Figuren 3 und 4 wird die Leitung 10 zunächst mit Schwerkraft befüllt, bis der Benetzungssensor 66 anspricht. Das Produkt weist zu diesem Zeitpunkt in der Regel allenfalls vernachlässigbare Anteile von gelöstem Gas auf. Die Entgasung des Rohrleitungssystemes beim Befüllen findet durch Schwerkraft und Auftrieb von Gasblasen statt, wobei austretende Gaseinschlüsse über die Entlüftungsleitung 61 abgeführt werden können. Gegebenenfalls kann beim Befüllen auch die Pumpe 9 betrieben werden. Die Pumpe 9 baut dabei jedoch keinen wesentlichen Druck auf, da das Ventil 62 der Entlüftungsleitung 61 geöffnet ist.

Nachdem sich die Messstrecke beruhigt hat und der Benetzungssensor 66 "Befüllung" meldet, wird das Entlüftungsventil 62 geschlossen. Die Füllgradmesseinrichtung 6 führt nun eine erste Messung durch. Überdies wird mittels des Temperatursensors 65 eine Temperaturmessung zu Kompensationszwecken durchgeführt.

Nun wird das entsprechende Schlauchventil 31, 31' geöffnet und die Pumpe 9 aktiviert, die den Förderdruck in der Leitung 10 aufbaut. Die Durchflussmesseinrichtung 7, die als mittelbarer Durchflusszähler ausgebildet ist, ermittelt dabei den aktuellen Fluss. Die Füllgradmesseinrichtung 6 ermittelt fortlaufend den Füllgrad, wobei die Messwerte zeitverzögert mit den Messwerten der Durchflussmesseinrichtung 7 verrechnet werden, um den Abstand zwischen Füllgradmesseinrichtung 6 und Durchflussmesseinrichtung 7 zu berücksichtigen. Dabei wird auch eine Mittelung des Füllgrades durchgeführt.

Sinkt der Füllstand im Tank ab, so kann es zur Ausbildung eines Strudels 200 kommen. Im ersten Leitungsbereich 13, der saugseitig der Pumpe 9 angeordnet ist, und in dem ein Unterdruck herrscht, können sich in Folge der Strudelbildung Blasen 201 ausbilden. Die Pumpe 9, die bevorzugt als Kreiselpumpe ausgebildet ist, dispergiert diese Blasen 201, so dass die Blasen im zweiten Leitungsbereich 14 druckseitig der Pumpe 9 in Lösung gehen. Im Bereich der Füllgradmesseinrichtung 6 und der Durchflussmesseinrichtung 7 liegt somit ein Produkt mit gelöster Luft vor, wobei der Partialdruck des Gases annähernd der Gesamtdruck ist.

Das Auftreten eines Lufteinschlages wird durch die Füllgradmesseinrichtung 6 erkannt und rechnerisch, auch unter Berücksichtung des Drucks, korrigiert.

## Patentansprüche

1. Verfahren zur Übergabe einer zumindest zeitweise einen Gaseinschluss aufweisenden Flüssigkeit, insbesondere von Kraftstoff, zur Bestimmung der übergebenen Flüssigkeitsmenge, bei dem

   - die Flüssigkeit durch eine Leitung (10) gefördert wird,
   - eine Druckmessung in der Leitung (10) durchgeführt wird,
   - eine Füllgradmessung in der Leitung (10) durchgeführt wird,
   - wobei aus dem Ergebnis der Druckmessung und/oder dem Ergebnis der Füllgradmessung ein Korrekturwert ($V_{KL}$) und/oder ein Zählerfaktor (TF) ermittelt wird,
   - eine Durchflussmessung in der Leitung (10) durchgeführt wird,
   - das Ergebnis der Füllgradmessung mit dem Ergebnis der Durchflussmessung verrechnet, insbesondere multipliziert wird, wobei ein Fördermengenwert ($V_{mes}$) erhalten wird,
   - wobei der Fördermengenwert ($V_{mes}$), der durch Verrechnung des Ergebnisses der Füllgradmessung mit dem Ergebnis der Durchflussmessung erhalten wird, mit dem Korrekturwert ($V_{KL}$) korrigiert wird, wodurch ein korrigierter Fördermengenwert ($V_{GES}$) erhalten wird,
   - der korrigierte Fördermengenwert ($V_{GES}$) als Maß für die übergebene Flüssigkeitsmenge herangezogen wird, **dadurch gekennzeichnet,**
   - **dass** der Wert die in der Flüssigkeit gelösten Gaseinschlüsse berücksichtigt, wobei folgende Beziehungen gelten:
   - $V_{GES} = V_{mes} - V_{KL}$
   - $V_{KL} = TF \cdot V_{mes} ((DF \cdot L^2 + K \cdot L) \cdot V_{mes})$
   - Hierbei bedeuten:
   - DF = Druckfaktor als lineare Funktion des gemessenen Drucks
   - L = gemessener Gasanteil in Prozent
   - K = parametrierbarer Faktor druckunabhängig und gegebenenfalls auch anlagenunabhängig.

**2.** Verfahren nach Anspruch 1,
**dadurch gekennzeichnet,**

- **dass** die Flüssigkeit mittels einer Pumpe (9) durch die Leitung (10) gefördert wird, wobei die Pumpe (9) auf ihrer Druckseite eine Druckerhöhung bewirkt,
- **dass** die Füllgradmessung auf der Druckseite der Pumpe (9) durchgeführt wird,
- **dass** die Durchflussmessung auf der Druckseite der Pumpe (9) durchgeführt wird, und
- **dass** der Fördermengenwert ($V_{mes}$) zum Berücksichtigen des Lösens des Gaseinschlusses in der Flüssigkeit verringert wird und so der korrigierte Fördermengenwert ($V_{GES}$) erhalten wird.

**3.** Verfahren nach Anspruch 1 oder 2,
**dadurch gekennzeichnet, dass** zur Durchflussmessung ein mittelbarer Volumenzähler, insbesondere ein Turbinenzähler, verwendet wird.

**4.** Verfahren nach einem der Ansprüche 1 bis 3,
**dadurch gekennzeichnet, dass** zur Füllgradmessung eine elektrische Messung, insbesondere eine Kapazitätsmessung und/oder eine Leitfähigkeitsmessung, durchgeführt wird.

**5.** Verfahren nach einem der Ansprüche 1 bis 4 **dadurch gekennzeichnet, dass** als Zählerfaktor (TF) ein volumengewichteter Mittelwert verwendet wird, der bestimmt wird zu $TF=\sum (TF_a \cdot V_T)/V_{akt}$, wobei
$TF_a$ der aktuelle Zählerfaktor
$V_T$ das Teilvolumen und
$V_{akt}$ das bis zum Berechnungszeitpunkt aufgelaufene Volumen ist.

**6.** Verfahren nach einem der Ansprüche 1 bis 5 **dadurch gekennzeichnet, dass** die Übergabe abgebrochen wird, wenn der gemessene Füllgrad und/oder gemessene Gasanteil einen Sättigungswert erreicht.

**7.** Verfahren nach einem der Ansprüche 1 bis 6 **dadurch gekennzeichnet, dass** die Flüssigkeit über einen Vollschlauch abgegeben wird, und dass ein Flüssigkeitsvolumen im Inneren des Vollschlauches bei der Bestimmung der übergebenen Flüssigkeitsmenge als konstant angenommen wird.

**8.** Vorrichtung zur Übergabe einer zumindest zeitweise einen Gaseinschluss aufweisenden Flüssigkeit, insbesondere von Kraftstoff, und zur Bestimmung der übergebenen Flüssigkeitsmenge, insbesondere zur Durchführung des Verfahrens nach einem der Ansprüche 1 bis 7, mit

- einer Leitung (10) zum Fördern der Flüssigkeit,
- einer an der Leitung (10) angeordneten Füllgradmesseinrichtung (6),
- einer an der Leitung (10) angeordneten Durchflussmesseinrichtung (7),
- einer an der Leitung (10) angeordneten Druckmesseinrichtung (67, 68, 67') und
- einer Recheneinrichtung (100), die mit der Füllgradmesseinrichtung (6) und der Durchflussmesseinrichtung (7) in Signalverbindung steht und die dafür eingerichtet ist, Messergebnisse der Füllgradmesseinrichtung (6) mit Messergebnissen der Durchflussmesseinrichtung (7) zu verrechnen, wobei ein Fördermengenwert ($V_{mes}$) erhalten wird, **dadurch gekennzeichnet,**
- **dass** die Recheneinrichtung (100) so eingerichtet ist, dass der Fördermengenwert ($V_{mes}$), der durch Verrechnung der Messergebnisse der Füllgradmesseinrichtung (6) mit den Messergebnissen der Durchflussmesseinrichtung (7) erhalten wird, mit einem druckabhängigen Korrekturwert korrigiert wird, der ein Lösen des Gaseinschlusses in der Flüssigkeit berücksichtigt, wodurch ein korrigierter Fördermengenwert ($V_{GES}$) erhalten wird,
- **dass** die Recheneinrichtung (100) so eingerichtet ist, dass der korri gierte Fördermengenwert ($V_{GES}$) als Maß für die übergebene Flüssigkeitsmenge ausgegeben wird,
- wobei die Recheneinrichtung (100) folgende Beziehungen berücksichtigt:

$$V_{GES} = V_{mes} - V_{KL}$$

$$V_{KL} = TF \cdot V_{mes}$$

$$TF = (DF \cdot L^2 + K \cdot L)$$

$$V_{KL} = (DF \cdot L^2 + K \cdot L) \cdot V_{mes}$$

Dabei bedeuten:

$V_{KL}$ Korrekturwert TF Zählerfaktor
DF Druckfaktor als lineare Funktion des gemessenen Druckes L der gemessene Gasanteil in Prozent
K parametrierbarer, druckunabhängiger und gegebenenfalls anlagenunabhängiger Faktor

**9.** Vorrichtung zur Übergabe einer zumindest zeitweise einen Gaseinschluss aufweisenden Flüssigkeit, insbesondere von Kraftstoff, und zur Bestimmung der übergebenen Flüssigkeitsmenge, insbesondere nach Anspruch 8, mit

- einer Leitung (10) zum Fördern der Flüssigkeit,
- einer an der Leitung (10) angeordneten Füllgradmesseinrichtung (6),
- einer an der Leitung (10) angeordneten Durchflussmesseinrichtung (7), und
- einer Recheneinrichtung (100), die mit der Füllgradmesseinrichtung (6) und der Durchflussmesseinrichtung (7) in Signalverbindung steht und die dafür eingerichtet ist, Messergebnisse der Füllgradmessein richtung (6) mit Messergebnissen der Durchflussmesseinrichtung (7) zu verrechnen, wobei ein Fördermengenwert ($V_{mes}$) erhalten wird, **dadurch gekennzeichnet, dass** die Durchflussmesseinrichtung (7) ein Verdrängungszähler ist.

## Claims

**1.** Method for transferring a liquid with one at least temporary gas inclusion, particularly fuel, for determining the amount of transferred liquid, in which

- the liquid is conveyed through a pipe (10),
- a measurement of pressure in the pipe (10) is carried out,
- a measurement of filling degree in the pipe (10) is carried out,
- wherein a correction value ($V_{KL}$) and/or a meter factor (TF) is calculated from the result of the pressure measurement and/or the result of the measurement of filling degree,
- a measurement of throughflow in the pipe (10) is carried out,
- the result of the filling degree measurement is calculated , particularly multiplied, with the result of the throughflow measurement, wherein a delivery volume ($V_{mes}$) is obtained,
- wherein the delivery volume value ($V_{mes}$) which is obtained by calculating the result of the filling degree measurement with the result of the throughflow measurement is corrected with the correction value ($V_{KL}$), yielding a corrected delivery volume value ($V_{GES}$),
- the corrected delivery volume value ($V_{GES}$) is used as a measurement of the amount of liquid transferred, **characterized in that**
- the value takes into account the gas inclusions dissolved in the liquid, wherein the following relationships apply:
- $V_{GES} = V_{mes} - V_{KL}$
- $V_{KL} = TF \cdot V_{mes} = ((DF \cdot L^2 + K \cdot L) \cdot V_{mes})$
- in which:
- DF = pressure factor as a linear function of the measured pressure
- L = the measured gas content as a percentage
- K = a paramterizable factor independent of pressure and optionally independent of system as well.

**2.** Method according to Claim 1,
**characterized in that**

- the liquid is conveyed through the pipe (10) by means of a pump (9), wherein the pump (9) causes a pressure increase on the pressure side thereof,
- the filling degree measurement is carried out on the pressure side of the pump (9),
- the throughflow measurement is carried out on the pressure side of the pump (9), and

- the delivery volume value ($V_{mes}$) is reduced to take into account the dissolution of the gas inclusion in the liquid, thus yielding the corrected delivery volume value ($V_{GES}$).

3. Method according Claim 1 or 2,
**characterized in that** an indirect volume meter, particularly a turbine meter, is used to measure the throughflow.

4. Method according to any one of the Claim 1 to 3,
**characterized in that** an electrical measurement, particularly a capacitance measurement and/or a conductivity measurement is carried out to measure the filling degree.

5. Method according to any one of Claims 1 to 4,
**characterized in that** a volume-weighted average is calculated as the meter factor (TF) by $TF = \sum (TF_a \bullet V_T)/V_{akt})$, wherein
$TF_a$ is the current meter factor
$V_T$ is the partial volume, and
$V_{akt}$ is the cumulative value of the volume up until the calculation time.

6. Method according to any one of Claims 1 to 5, **characterized in that** the transfer is suspended when the measured filling degree and/or the measured gas content reaches a saturation value.

7. Method according to any one of Claims 1 to 6,
**characterized in that** the liquid is discharged via a full hose, and a liquid volume inside the full hose is assumed to be constant during the determination of the amount of liquid transferred.

8. Device for transferring a liquid with one at least temporary gas inclusion, particularly fuel and for determining the amount of transferred liquid, particularly for carrying out the method according to any one of Claims 1 to 7, with

- a pipe (10) for conveying the liquid,
- a filling degree measurement device (6) arranged on the pipe (10),
- a throughflow measurement device (7) arranged on the pipe (10),
- a pressure measurement device (67, 68, 67') arranged on the pipe (10), and
- a calculating device (100) which is in signal communication with the filling degree measurement device (6) and the throughflow measurement device (7) and is configured to calculate measurement results from the filling degree measurement device (6) with measurement results from the throughflow measurement device (7) wherein a delivery volume ($V_{mes}$) is obtained, **characterized in that**
- the calculating device (100) is configured such that the flow value ($V_{mes}$) which is obtained by calculating the measurement results of the filling degree measurement device (6) with the measurement results of the throughflow measurement device (7) is corrected with a pressure-dependent correction value that takes into account a dissolution of the gas inclusion in the liquid, thus yielding a corrected delivery volume ($V_{GES}$),
- the calculating device (100) is configured such that the corrected delivery volume ($V_{GES}$) is obtained as a measurement of the amount of liquid transferred,
- wherein the calculation device (100) takes into account the following relationships:

$$V_{GES} = V_{mes} - V_{KL}$$

$$V_{KL} = TF \bullet V_{mes}$$

$$TF = (DF \bullet L^2 + K \bullet L)$$

$$V_{KL} = (DF \bullet L^2 + K \bullet L) \bullet V_{mes}$$

in which:

$V_{KL}$ stands for the correction value
TF stands for the meter factor
DF stands for the pressure factor as a linear function of the measured pressure
L stands for the measured gas content as a percentage
K stands for a paramterizable factor independent of pressure and optionally independent of system as well.

**9.** Device for transferring a liquid with one at least temporary gas inclusion, particularly fuel and for determining the amount of transferred liquid, particularly according to Claim 8, with

- a pipe (10) for conveying the liquid,
- a filling degree measurement device (6) arranged on the pipe (10),
- a throughflow measurement device (7) arranged on the pipe (10), and
- a calculating device (100) which is in signal communication with the filling degree measurement device (6) and the throughflow measurement device (7) and is configured to calculate measurement results from the filling degree measurement device (6) with measurement results from the throughflow measurement device (7) wherein a delivery volume ($V_{mes}$) is obtained, **characterized in that** the throughflow measurement device (7) is a displacement flow meter.

## Revendications

**1.** Procédé de transmission d'un liquide contenant au moins ponctuellement une insufflation de gaz, notamment du carburant, pour déterminer la quantité de liquide transmis, lors duquel

- on convoie le liquide à travers un conduit (10),
- on procède à une mesure de la pression dans le conduit (10),
- on procède à une mesure du niveau de remplissage dans le conduit (10),
- à partir du résultat de la mesure de la pression et/ou du résultat de la mesure du niveau de remplissage, une valeur corrective ($V_{KL}$) et/ou un facteur numérateur (TF) étant déterminé,
- on procède à une mesure du débit dans le conduit (10),
- on compense, notamment on multiplie le résultat de la mesure du niveau de remplissage avec le résultat de la mesure du débit, une valeur de la quantité convoyée ($V_{mes}$) étant obtenue,
- on corrige la valeur de la quantité convoyée ($V_{mes}$) qui est obtenue par compensation du résultat de la mesure du niveau de remplissage avec le résultat de la mesure du débit avec la valeur corrective ($V_{KL}$), suite à quoi on obtient une valeur corrigée de la quantité convoyée ($V_{GES}$),
- on a recours à la valeur corrigée de la quantité convoyée ($V_{GES}$) comme dimension pour la quantité de liquide transféré,

**caractérisé en ce que** :

- la valeur tient compte des inclusions gazeuses dissoutes dans le liquide, sachant que les relations suivantes sont valables :
- $V_{GES} = V_{mes} - V_{KL}$
- $V_{KL} = TF \cdot V_{mes} = ((DF \cdot L^2 + K \cdot L) \cdot V_{mes})$
- Avec les significations suivantes :
- DF = facteur de pression, en tant que fonction linéaire de la pression mesurée
- L = part de gaz mesurée en pourcentage
- K = facteur paramétrable indépendamment de la pression et le cas échéant, également indépendamment de l'installation.

**2.** Procédé selon la revendication 1,
**caractérisé**

- **en ce que** le liquide est convoyé au moyen d'une pompe (9) à travers le conduit (10), sur son côté pression, la pompe (9) provoquant une montée en pression,
- **en ce qu'**on procède à la mesure du niveau de remplissage sur le côté pression de la pompe (9),
- **en ce qu'**on procède à la mesure du débit sur le côté pression de la pompe (9),
- **en ce qu'**on réduit la valeur de la quantité convoyée ($V_{mes}$) pour la prise en compte de la dissolution de l'inclusion gazeuse dans le liquide et on obtient ainsi la valeur corrigée de la quantité convoyée ($V_{GES}$).

**3.** Procédé selon la revendication 1 ou 2, **caractérisé en ce que** pour la mesure du débit, on utilise un compteur volumétrique indirect, notamment un compteur à turbine.

**4.** Procédé selon l'une quelconque des revendications 1 à 3, **caractérisé en ce que** pour la mesure du niveau de remplissage, on procède à une mesure électrique, notamment à une mesure capacitive et/ou à une mesure de conductibilité.

**5.** Procédé selon l'une quelconque des revendications 1 à 4, **caractérisé en ce qu'**en tant que facteur numérateur (TF), on utilise une valeur moyenne pondérée en volume, qui est déterminée à $TF = \sum (TF_a \bullet VT)/V_{akt}$, sachant que
$TF_a$ est le facteur numérateur actuel,
$V_T$ est le volume partiel et
$V_{axt}$ est le volume accumulé jusqu'au moment du calcul.

**6.** Procédé selon l'une quelconque des revendications 1 à 5, **caractérisé en ce qu'**on interrompt le transfert lorsque le niveau de remplissage mesuré et/ou la part de gaz mesurée atteint une valeur de saturation.

**7.** Procédé selon l'une quelconque des revendications 1 à 6, **caractérisé en ce que** le liquide est restitué par l'intermédiaire d'un flexible plein et **en ce qu'**un volume de liquide à l'intérieur du flexible plein est supposé comme étant constant lors de la détermination de la quantité de liquide transféré.

**8.** Dispositif de transmission d'un liquide, contenant au moins ponctuellement une insufflation de gaz, notamment du carburant et à déterminer la quantité de liquide transféré, notamment à réaliser le procédé selon l'une quelconque des revendications 1 à 7, comprenant :

- un conduit (10) pour le convoyage du liquide,
- un système de mesure du niveau de remplissage (6) placé sur le conduit (10),
- un système de mesure du débit (7) placé sur le conduit (10),
- un système de mesure de la pression (67, 68, 67') placé sur le conduit (10),
- un système de calcul (100) qui est en communication par signaux avec le système de mesure du niveau de remplissage (6) et avec le système de mesure du débit (7) et qui est aménagé pour compenser des résultats mesurés par le système de mesure du niveau de remplissage (6) avec des résultats mesurés par le système de mesure du débit (7), une valeur de la quantité convoyée ($V_{mes}$) étant obtenue,

**caractérisé**

- **en ce que** le système de calcul (100) est aménagé de sorte que la valeur de la quantité convoyée ($V_{mes}$) qui est obtenue par compensation des résultats mesurés par le système de mesure du niveau de remplissage (6) avec les résultats mesurés par le système de mesure du débit (7) soit corrigée avec une valeur corrective dépendant de la pression, qui tient compte d'une dissolution de l'inclusion gazeuse, suite à quoi, il est obtenu une valeur corrigée de la quantité convoyée ($V_{GES}$),
- **en ce que** le système de calcul (100) est aménagé de sorte que la valeur corrigée de la quantité convoyée ($V_{GES}$) soit éditée en tant que dimension pour la quantité de liquide transféré,
- le système de calcul (100) tenant compte des relations suivantes :

$$V_{GES} = V_{mes} - V_{KL}$$

$$V_{KL} = TF \bullet V_{mes}$$

$$TF = ((DF \bullet L^2 + K \bullet L)$$

$$V_{KL} = ((DF \cdot L^2 + K \cdot L).V_{mes})$$

Avec les significations suivantes :

$V_{KL}$ = valeur corrective TF = facteur numérateur
DF = facteur de pression, en tant que fonction linéaire de la pression mesurée
L = la part de gaz mesurée en pourcentage
K = facteur paramétrable indépendamment de la pression et le cas échéant, également indépendamment de l'installation.

**9.** Dispositif destiné à transférer un liquide comportant au moins temporairement une inclusion gazeuse, notamment du carburant et à déterminer la quantité de liquide transféré, notamment selon la revendication 8, avec

- un conduit (10) pour le convoyage du liquide,
- un système de mesure du niveau de remplissage (6) placé sur le conduit (10),
- un système de mesure du débit (7) placé sur le conduit (7),
- un système de calcul (100) qui est en communication par signaux avec le système de mesure du niveau de remplissage (6) et avec le système de mesure du débit (7) et qui est aménagé pour compenser des résultats mesurés par le système de mesure du niveau de remplissage (6) avec des résultats mesurés par le système de mesure du débit (7), une valeur de la quantité convoyée ($V_{mes}$) étant obtenue,

**caractérisé en ce que** le système de mesure du débit (7) est un compteur à déplacement.

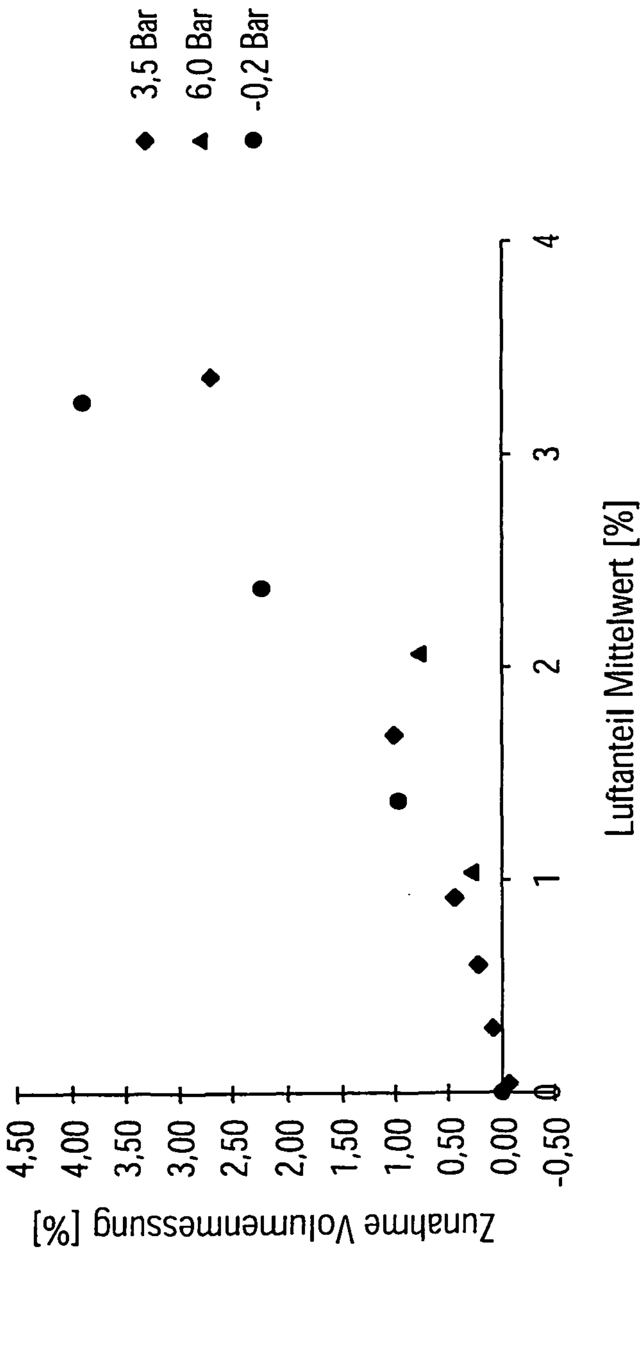
3,5 Bar
6,0 Bar
-0,2 Bar
Zunahme Volumenmessung [%]
4,50
4,00
3,50
3,00
2,50
2,00
1,50
1,00
0,50
0,00
-0,50
0
1
2
3
4
Luftanteil Mittelwert [%]

FIG. 1

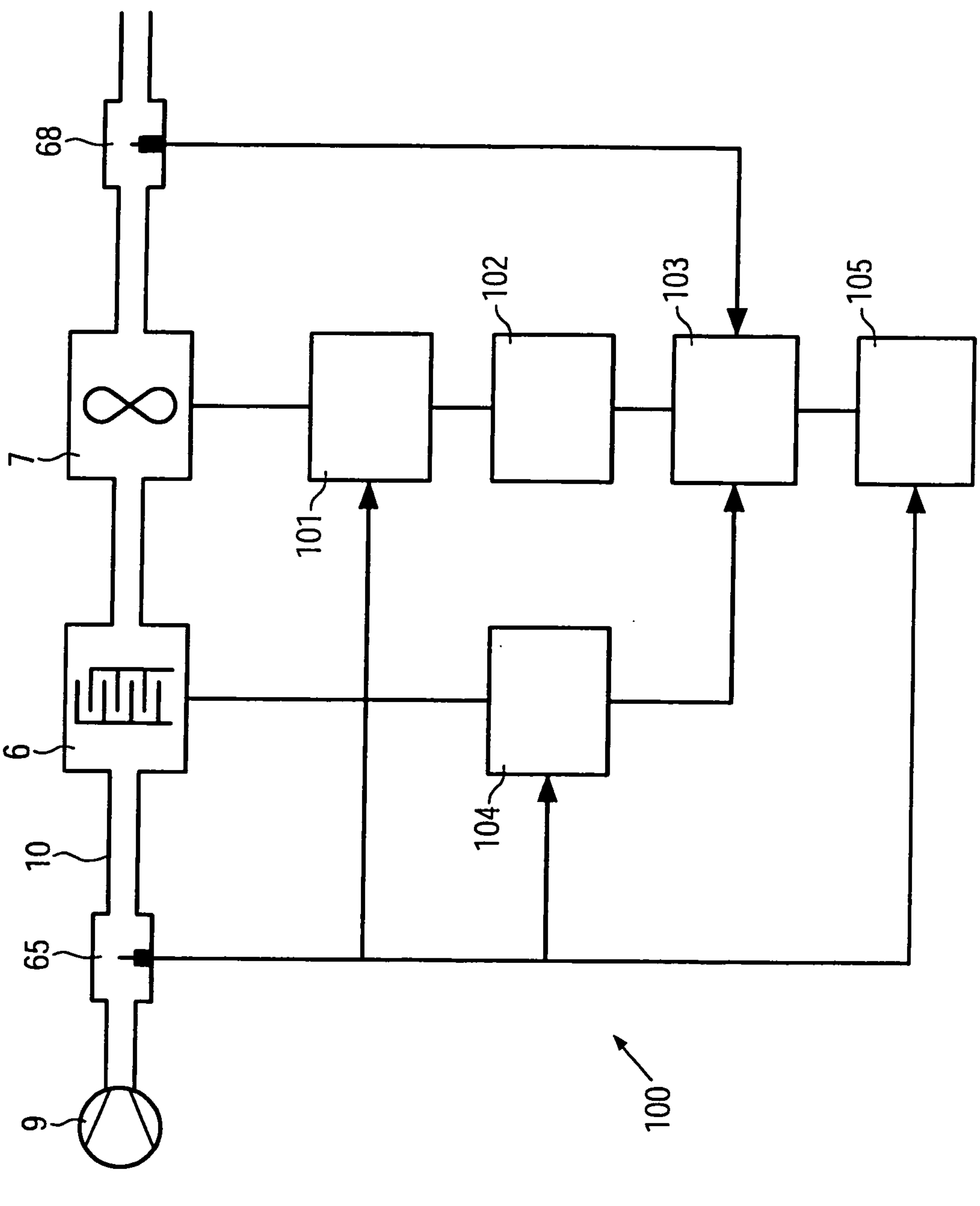


FIG. 2

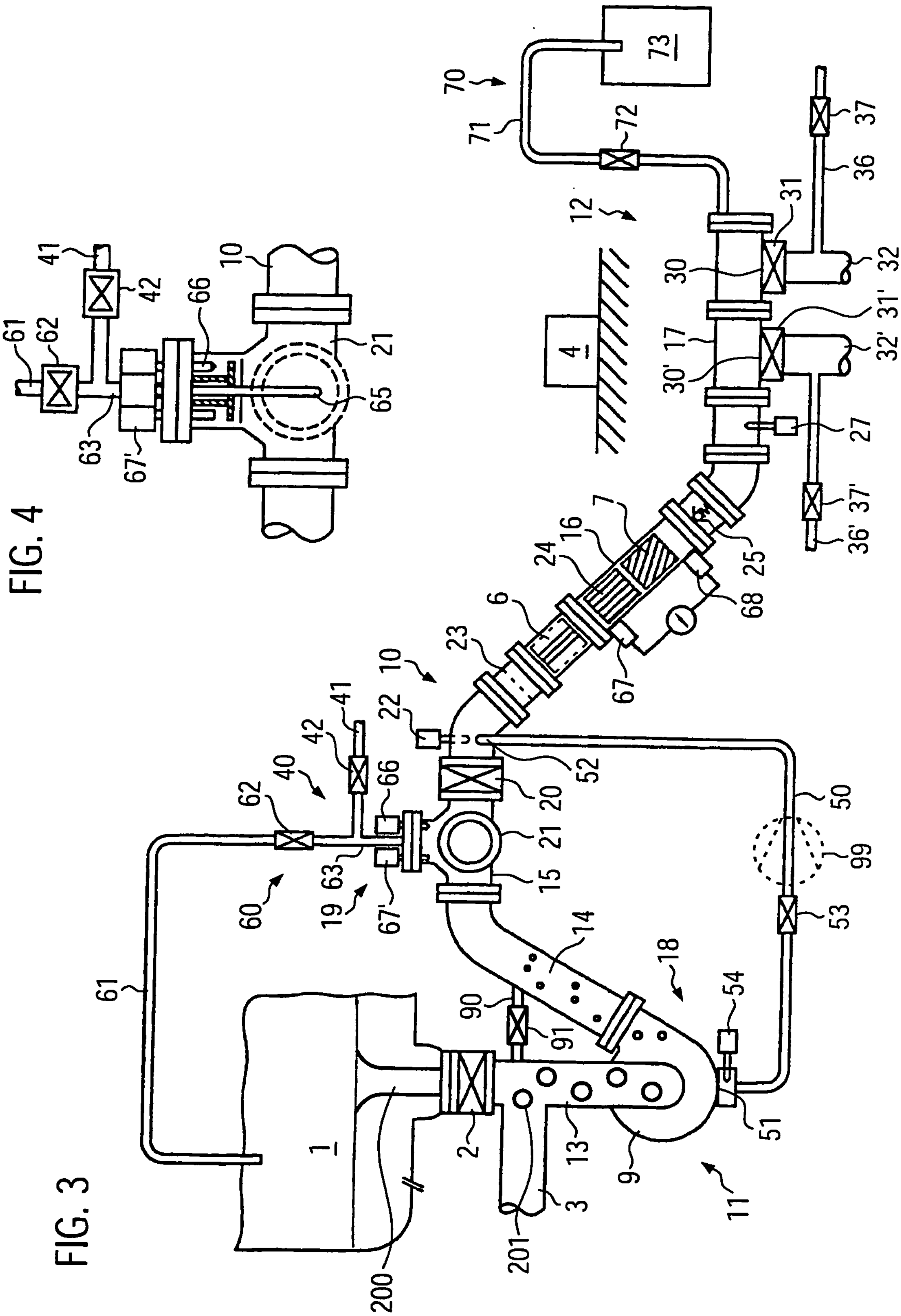

FIG. 3

FIG. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19540884 C2
- DE 102005005295 A1
- WO 2008106989 A
- DE 102008047122
- DE 202004019442
- WO 2008106989A1 A